# EUROPEAN PATENT SPECIFICATION

(11) **EP 0 470 164 B1**
(45) Date of publication and mention of the grant of the patent: **23.01.2002**
(21) Application number: 90907283.7
(22) Date of filing: 27.04.1990
(51) Int. Cl.: G01N 21/17, G01N 21/75, G01N 33/53, G01J 5/34

(54) **ANALYTICAL APPARATUS**
ANALYSEVORRICHTUNG
APPAREIL D'ANALYSE

(30) Priority: 27.04.1989 GB 8909701
(43) Date of publication of application: 12.02.1992
(73) Proprietor: MICROBIOLOGICAL RESEARCH AUTHORITY, Salisbury, Wiltshire SP4 0JG (GB)
(72) Inventor: CLARKE, David, John "Carefree", Salisbury SP4 0AR (GB); ZAMANI-FARAHANI, Freidoun The Mews Fyfield Lane, Andover SP4 0QW (GB)
(74) Representative: Schlich, George William
(86) International application number: GB9000658
(87) International publication number: WO9013017

(56) References cited:
- EP-A- 0 142 481
- DE-A- 3 432 972
- US-A- 3 772 518
- Journal of Vacuum Science & Technology, part A, Vol. 5, No. 5, 2nd Series, September/October 1987, American Vacuum Society, (Woodbury, NY, US), H.J. COUFAL et al.: "Pyroelectric Calorimeter for Photothermal Studies of Thin Films and Adsorbates", pages 2875-2889
- Journal of Applied Physics, Vol. 63, No. 6, 15 March 1988, American Institute of Physics, (Woodbury, NY, US), K. TANAKA et al.: "Pyroelectric Photothermal Spectroscopy for Thin Solid Films", pages 1815-1819
- PATENT ABSTRACTS OF JAPAN, Vol. 13, No. 30 (P-816), 24 January 1989, & JP, A, 63228066 (Toray Ind. Inc.) 22 September 1988

## Description

This invention relates to analytical apparatus and methods of analysis, utilising the absorption at visible or other appropriate wavelengths of a reagent, analyte or related medium. The invention is concerned with the biochemical assays.

A wide variety of current diagnostic and other biochemical tests employ a reagent which undergoes an eye detectable colour change in the presence of the analyte. The reagent is often conveniently carried on a test strip. Optics may be provided to assist the comparison of the observed colour change with a standard colour chart. Alternatively, the optical absorption may be measured at one or more selected wavelengths. Whilst some arrangements permit the measurement of absorption through detection of transmitted light, reflectrometric arrangements are usually more convenient.

In many fields, the amount of sample available for analysis is very much restricted. It is accordingly desirable to have apparatus which is capable of analysing small drops or thin layers of sample. In many cases, immunoassay techniques being good examples, the thin layer approach has important further advantages. It becomes possible, for example, to immobilise the reagent (whether antibody or antigen) upon a surface and thus remove the need for a separation step. Examples of related techniques are enzyme-linked colorimetric assays and tests for other biochemical analytes.

In the particular field of immunoassays, the technique of internal reflection spectroscopy is known. A thin layer of sample material is established on a surface of a transparent optical element and measurements made of internal reflection of light at the interface with the sample. The same technique can be employed to measure fluorescence within the thin layer sample and other techniques have been suggested for detecting a shift in refractive index or polarisation.

A drawback of the techniques proposed hitherto is that they rely upon optical detection of reflected or transmitted light with subsequent signal processing providing the required measure of absorption, fluorescence or other optical parameter of interest. This is believed to have hindered the development of apparatus to meet the demands of specific applications. Thus, it is desirable in many applications to produce apparatus which is both compact and rugged. Under certain circumstances, where for example the analyte is potentially toxic or poses a microbiological contamination or health risk, it is desirable to have analytical apparatus of a form which is disposable after each analysis. In some cases, it would be advantageous to permit a number of analytical procedures to be conducted upon the same body of sample. The techniques employed hitherto do no lend themselves to embodiment in these forms.

EP-A-0142481 describes a method of analysing a sample using photoacoustic or optothermal spectroscopy and a sample carrier for carrying out the analysis. Temperature variations in a sample carried in the carrier result in expansion and contraction of an expansion element which is converted by a piezo-electric transducer into signals.

Tanaka et al in Journal of Applied Physics, 63, 15th March 1998, No. 6, pages 1815-1819 describe a piezo-electric method for spectroscopy carried out on thin solid films. Thin liquid layers may also be studied using that method.

It is an object of one aspect of this invention to provide improved analytical apparatus in which the need for optical detection systems is avoided.

It is a further object of one aspect of this invention to provide improved analytical apparatus which can take a simple and inexpensive form whilst retaining accuracy and reliability.

It is a still further object of one aspect of this invention to provide improved analytical apparatus in which dependence of results upon sample volume is diminished.

It is a further object of certain forms of this invention to provide analytical apparatus of sufficient sensitivity to enable multiple analytical procedures on one sample.

In a first aspect of the invention, there is provided biochemical analytical apparatus utilising a colorimetric effect to provide an indication of one or more analytes in a sample, the apparatus comprising at least one body of reagent and a solid state transducer a pyroelectric element and being substantially transparent to light at an irradiation frequency, the transducer element having electrode means and a surface, there being immobilised on said transducer surface said least one body of reagent, said reagent undergoing a colorimetric change in the presence of the analyte, the transducer element being adapted to receive a body of sample at said surface, the volume of the reagent being small compared with the volume of the sample, and adapted to provide an output signal at said electrode means indicative of energy absorption proximal said surface; means for irradiating the sample through the transducer element with light at the irradiation frequency such that heat is generated by light absorption in an amount representative of said effect and processor means for receiving said transducer output signal and adapted to derive information therefrom regarding the analyte.

Since the reagent is provided on a transducer surface sensitive to heat generation, light absorption in the reagent can be detected through localised heat generation. In the preferred case where the amplitude of the light source is modulated, periodic or pulsed heat generation can be detected in a manner which is ideally phase locked with the modulation of the illuminating light source.

The present invention uses a pyroelectric element which serves as the transducer and a surface of that element receives the reagent.

In an important form of the present invention, said means for irradiating serves to direct light or other radiation through the transducer, which is arranged to be substantially transparent at the appropriate wavelengths.

It is quite possible to produce pyroelectric elements, such as polyvinylidene fluoride film, which are optically transparent. Similarly, techniques are available for the production of thin film electrodes which have sufficiently low absorption for this purpose.

An important further advantage offered by certain forms of the present invention is the ability to operate with small sample volumes without the difficulty found in certain existing apparatus that the results of the assay or detection are dependent upon the sample volume. In the existing apparatus, the proportion of the sample becoming bound or otherwise trapped within the body of reagent, can be significant in terms of the overall sample volume. There will accordingly be a shift in effective concentration which is volume dependent. In accordance with the present invention, the reagent volume - or as appropriate the reagent/transducer volume - can be made sufficiently small that the dependence on overall sample volume becomes negligible, even with small

In a further aspect of the invention, there is provided a method of biochemical analysis of a sample, using the biochemical analytical apparatus of the first aspect of the invention, wherein the method comprises establishing a body of sample at said surface; irradiating the sample through the transducer element with light at the irradiation frequency such that heat is generated by light absorption in an amount representative of a colorimetric effect; and monitoring said transducer output signal to derive, through determination of heat generation at said surface, analyte information.

Preferably, the step of irradiating with electromagnetic radiation comprises illuminating through the transducer means in the visible or near visible spectrum.

The transducer means comprises electrode means at which said output signal appears.

In one form of the invention, the method includes one or more sample preparation, manipulation or processing steps comprising the application of voltage or current to said electrode means.

This invention is regarded as having a number of important advantages. Removing the need for detection optics should result in a considerable simplification and cost reduction. In appropriate cases it will be feasible to provide disposal transducer/reagent elements. The ability to work with drops of sample will often simplify sample preparation techniques. The fact that, in certain forms of the invention, a colour change is detected through the transducer, should remove or considerably reduce background interference, for example from the sample. The depth of the interfacial layer that is probed may if necessary be controlled by varying the frequency and amplitude of the illumination.

The invention will now be described by way of examples with reference to the accompanying drawings in which:-
Figure 1 is a schematic view of apparatus according to the present invention;
Figure 2 is a graph illustrating the calibration of apparatus as shown in Figure 1;
Figure 3 is a plan view (with an exploded part sectional view) of a test element forming part of apparatus according to a further embodiment of the present invention;
Figure 4 is a perspective sketch of hand-held test apparatus for use with the test element of Figure 3;
Figure 5 is a view similar to Figure 3 showing a further embodiment of the present invention;
Figure 6a) is a plan view of a test element forming part of apparatus according to a still further embodiment of the present invention;
Figure 6b) shows a section through the test element of Figure 6a) together a schematic representation of the corresponding light source;
Figures 7a) & b) and 8a) & b) are similar to Figures 6a) & b) but illustrating modifications;
Figure 9 is a graph illustrating experimental evaluation of apparatus generally as shown in Figure 1;
Figure 10 is a graph depicting the data of Figure 9 after further processing; and
Figure 11 is a sketch illustrating yet a further modification.

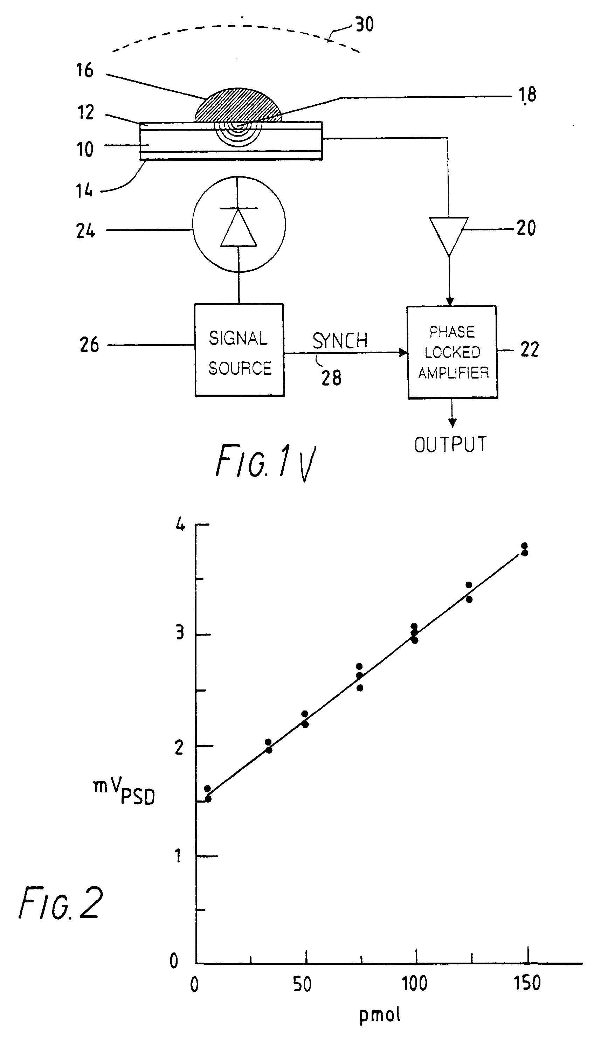

Referring initially to Figure 1, a pyroelectric transducer comprises a PVDF film 10 having electrode coatings 12, 14 on the upper and lower surfaces respectively. The electrode coatings are in this example formed of sputter coated gold having a thickness in the range 5 to 15 nm. Strips of reagent 16 are deposited, using any suitable technique, upon the upper electrode coating 12. Each reagent strip may optionally carry on its upper surface a separation layer (not shown) to prevent interferents in the sample from coming into contact with the reagent. In many cases, however, such separation layers will be unnecessary.

The electrode coatings 12 and 14 are connected to the inputs of a charge amplifier 20 presenting a high input impedance, and the output of the charge amplifier is taken to a phase locked amplifier 22. A light source 24 - taking in this example the form of a light emitting diode is positioned so as to illuminate the reagent strips through the pyroelectric film 10 and its associated electrode coatings. The light source is powered through a modulator 26 which provides a square wave output typically up to about 15 Hz. A reference signal is taken on line 28 from the modulator 26 to the phase locked amplifier 22.

In use, a drop of sample is deposited upon the upper surface of the pyroelectric transducer, the outline of the drop being shown in the drawing at 30. In the presence of levels of analyte, the appropriately chosen reagent undergoes a change in optical absorption. Light from the source 24 is absorbed in the reagent - the LED being of course selected to provide light of the appropriate frequency for the reagent in question - and the light absorption causes microscopic heating over a localised region shown generally at 18. This heating is sensed by the transducer and results in a change in output from the amplifier 20. Through phase locking on the reference signal on line 28, the amplifier 22 is able to provide a sensitive output signal indicative of the heating and thus of the light absorption within the reagent. The output of phase locked amplifier 22 can be handled in a variety of ways. It can be digitised and sent on an appropriate bus to a microcomputer. An alternative would be to filter the signal and take an analogue reading in a voltmeter.

The type of reagent chosen will vary widely depending upon the analytical procedure. For example, in tests for ions, pH and heavy metal indicator dyes may be employed which change colour on chelation/binding of ions. A variety of reagents are known for assays of metabolites, drugs and biochemicals in blood and urine. One example is a paracetamol assay with production of aminophenol from paracetamol by arylacylamidase. In immunological assays, the reagent may take the form of a protein or microbial antigen. The reagent may also be the antibody. The technique is also applicable to enzyme linked iaauno-assays (ELISA).

The results achieved with the described apparatus can be illustrated with reference to Figure 2 which is a calibration curve using a tetrazolium dye. This dye is commonly used for detecting oxidoreductase enzyme-linked reactions and is therefore suitable for use in a wide range of biochemical tests (ELISA) techniques. The dye acts as an electron transfer mediator for natural enzyme co-factors such as NAD(P)⁺, (nicotine adenine dinucleotide (phosphate)).

As will be seen from Figure 2, there is a linear relationship between the voltage (expressed in mV) generated pyroelectrically across the electrodes 12,14 and the concentration of tetrazolium dye (expressed in picamoles).

It will be apparent that in use of the apparatus of Figure 1, a particular frequency or frequency range will be selected which is appropriate for the reagent being used. The light source may be broad band, such as a flash lamp, or may be a light emitting diode, laser diode or other laser, selected as providing light at or around the appropriate wavelength. It may be necessary to select materials and thicknesses for the electrode coatings which are sufficiently transmissive at the selected frequency of operation. Other possible electrode materials are silver film, indium tin oxide or a nickel based alloy (as supplied on the commercially available Penwalt PVDF Film) etched if necessary to reduce the coating thickness. Coatings can be applied by ion beam, by sputtering or in other known ways. If it is inconvenient to provide an electrode coating which is sufficiently transmissive, appropriate windows may be created in both the electrode layers. Thus each reagent strip may be deposited directly upon the PVDF film with the electrode layer 12 then covering the film surface between the reagent strips. On the opposite surface, the electrode coating takes a similar form.

Illumination of the reagent/sample through the essentially transparent transducer formed by the PVDF film and thin film electrodes, has the important advantage of removing or considerably reducing the effects of spurious absorption or reflection in the sample. The apparatus is sensitive only to absorption at a narrow surface region overlying the transducer surface. The ability to operate with small sample volumes is of considerable importance, as will be well understood. Moreover, the present invention reduces the problem of sample volume dependence which has significantly reduced the usefulness of earlier suggested "small sample volume" techniques. Specifically, the reaction volume of apparatus according to this invention, that is to say the reagent/sample volume where optical absorption contributes to the detected heat change, is small compared even with the small sample volume.

The described apparatus also offers improved kinetic characteristics, particularly the avoidance of inhomogeneous colour changes arising - for instance - from incomplete mixing of reagent/sample. Established large surface area test strip devices require complex sample mixing and spreading procedures if reproducible results are to be achieved. In addition, problems can arise with these and other chemical and biosensor devices where the test involves significant analyte consumption. Examples of such tests are amperometric electrochemical sensors, enzyme-linked tests, enzyme electrodes and some affinity reactions. Unless there is thorough and continuous stirring, erroneous results can arise from depletion of analyte in the unstirred layer proximal to the device surface. The very small reaction volume utilised in the present invention avoids such difficulties.

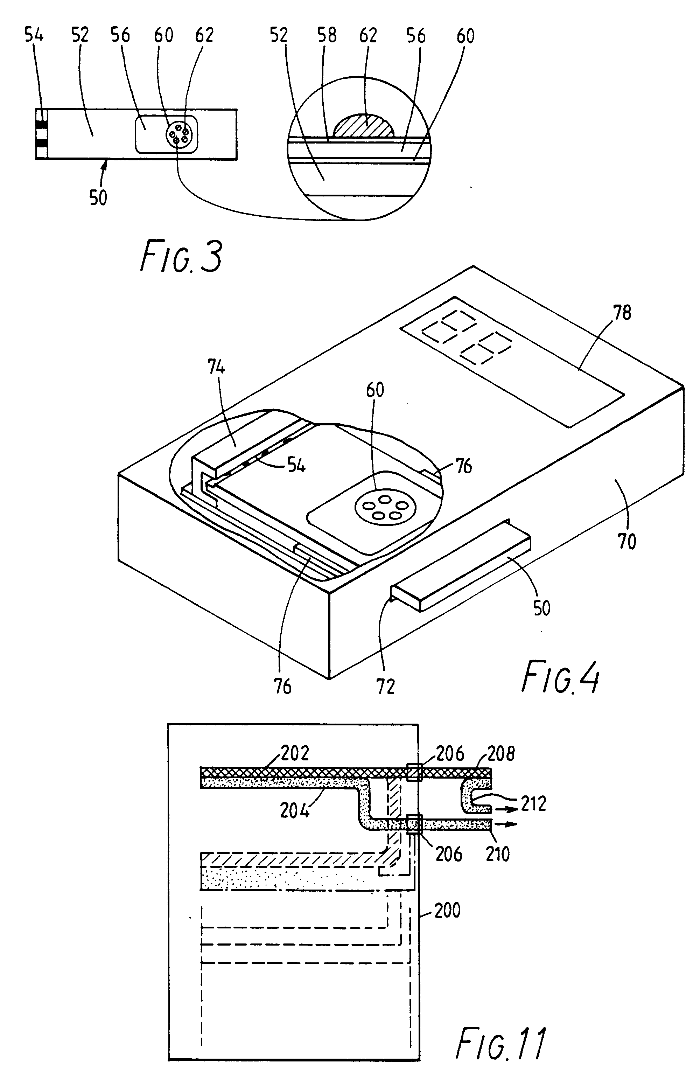

This invention can readily provide for multiple tests on the same sample. By way of illustration, reference is now directed to Figure 3.

In this example, a test element 50 - which may be disposable - comprises an inert substrate 52 of rectangular form. At one end, the strip 52 is provided with electrical connections 54 enabling the test element to be plugged into test apparatus. The substrate 52 carries a pyroelectric strip 56 in the form of a PVDF film. This PVDF film can, as shown in Figure 3, be deposited upon the substrate 52; alternatively, the PVDF film may be stretched across a window cut in the substrate.

The pyroelectric strip 56 carries upper and lower thin film electrodes 58 and 60. On the upper surface, there is defined a sample loading spot 60 and, within this spot, five distinct reagent regions 62 are provided.

The test element 52 can be used with hand-held test apparatus as illustrated in Figure 4. Referring to that Figure, a housing 70 is provided with a slot 72 into which the test element 50 can be slidingly engaged. Internally, the housing provides an edge connector 74 designed to mate with the electrical connectors 54 on the test element 50. An LED light source shown schematically at 76 is positioned within the housing 70 so as to be aligned with the sample spot 60 when the test element 50 is fully engaged.

The test apparatus contains battery powered circuitry (not shown) providing the modulated signal source, charge amplifier and phase locked amplifier as described with reference to Figure 1. There is further provided a microprocessor, which may be of commercially available form, which is connected to receive the output of the phase locked amplifier and to control - through an appropriate device driver - a display 78.

The test element 50 can, if appropriate, be of disposable form, this removes problems of contamination and of cleaning possibly hazardous sample material. The arrangement by which a preprepared test element, after contacting with a drop of sample, is simply pushed into test apparatus takes advantage of the simplicity inherent in this invention and offers considerable practical advantages without sacrificing experimental accuracy.

The different reagent regions 62 can, as will be described in more detail later, be illuminated sequentially using essentially a common transducer or simultaneously with the electrode films and PVDF film then fashioned so as to provide effectively separate transducers for the respective reagent regions.

The ability to conduct multiple tests on the same sample is useful in a number of ways. Clearly, the use of different reagents will enable two or more different assays to be conducted simultaneously. This is particularly useful where the amounts of available sample are limited. It is also possible to arrange for automatic compensation through comparison between different reagent strips. This technique can be employed to compensate for any device to device or batch to batch variation in manufacture or to compensate for an interfering physical change (for example thermal, acoustic or optical) it will also be possible to provide for "in-built" reagent calibration by including internal standards of analyte in a reagent layer to compensate for any biochemical interference effect or for variability in reagents.

The invention will also have applications in the field of electrophoresis. At present, a sample in gel form is sandwiched between glass plates or mounted upon a suitable substrate and, after electrophoresis has taken place, stained with appropriate dyes. The separated components can then be identified visually or analysis can be conducted automatically using a scanning optical densitometer. According to the present invention, the gel is mounted directly upon the PVDF film and after electrophoresis has taken place, absorption is determined in a manner analogous to that described above.

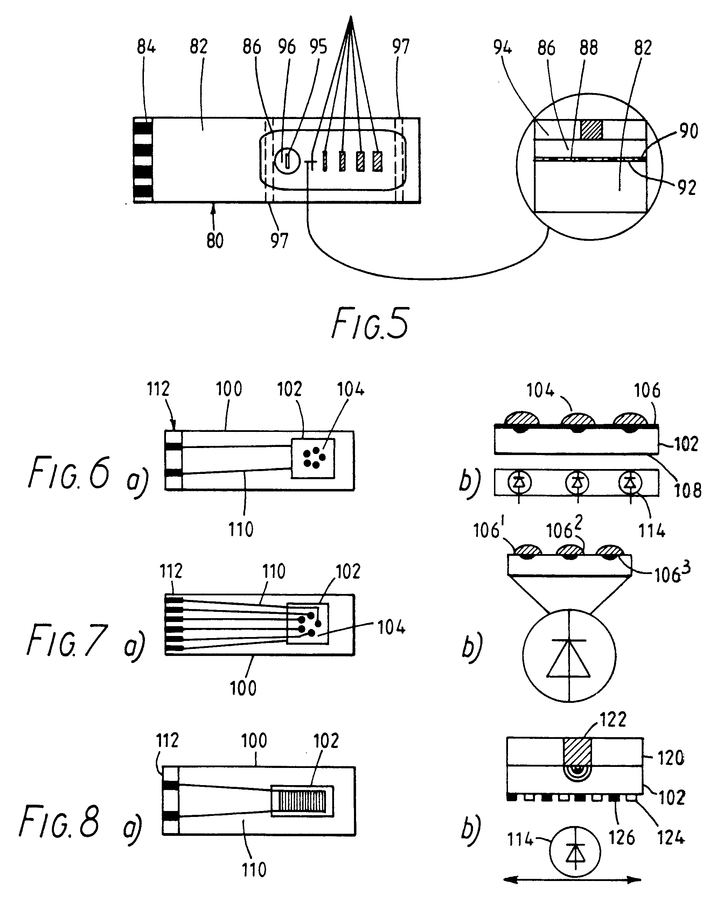

Referring now to Figure 5, there is shown a test strip 80 adapted for use in electrophoretic analysis. The test element 80 has, in common with that of Figure 3, a substrate 82 with electrical connections 84. The substrate carries an elongate pyroelectric strip 86 provided (in contrast with the previous arrangement) with an electrode layer 88 on the underside only. This electrode layer comprises two interleaved electrode structures with alternate parallel electrode strips such as 90 and 92 "belonging" to different electrode structures. In this way, an electric field created in the pyroelectric film, over a region comparable in dimension with the inter-electrode spacing, can be detected as a potential difference across the respective electrode structures.

The pyroelectric film 86 carries on its upper surface a layer of electrophoretic separation gel 94. A well 95 is cut into the gel at a sample loading spot 96. At opposite ends, field electrodes 97 are provided within the gel which lie parallel with the electrode strips 90, 92. The electrodes 97 are connected through further leads with the electrical connections 84.

In use, sample deposited at the sample loading spot 96 will, through well 95, be loaded into the electrophoretic gel and under the action of an electric field applied across electrodes 97, species within the sample will travel along the strip to form separated bands, as illustrated at 99. Subsequently, the test element can be loaded into test apparatus as described above for determination of the band positions through light absorption. A typical example of this technique is the rapid detection of glycosylated haemoglobin. This test is known as a useful means of determining whether diabetics are controlling their glucose levels effectively, because protein glycosylation reflects the level of glucose in the blood over a period of weeks or months depending principally upon the half life of the protein in blood. Glucose test of course only provide a measure of instantaneous glucose levels. In this application, the natural red colour of haemoglobin is detectable without staining. Glycosylated fractions can be electrophoretically separated by a number of established techniques, for example invoking electroendosmosis in agar medium or differential affinity of the glycosylated form using sugar binding lectins or antibodies bound to the separation medium.

Identification of the position of the separated bands using the detection of localised heat generation on light absorption in the bands, provides a very simple method for detecting glycosylated haemoglobin, and a wide variety of other electrophoretic analyses. These may involve naturally coloured or stained analytes and any convenient separation medium. If appropriate, the electrophoretic separation can be conducted contemporaneously with determination of band position. That is to say, the hand-held or other test apparatus can include the higher voltage supply required for the electrophoresis field electrodes, together with the appropriate timing controls.

Detecting the position of electrophoretically separated bands requires, as with the multi-analyte test described with reference to Figure 3, a degree of spatial resolution. Examples of techniques by which such spatial resolution can be provided will now be described with reference to Figures 6, 7 and 8.

Referring initially to Figure 6a), there is shown schematically a test strip 100 having a pyroelectric region 102 provided with five separate reagent regions such as 104. As shown in Figure 6b), the pyroelectric layer 102 has continuous electrode layers 106, 108 on its upper and lower surfaces respectively. These two electrode layers are connected through leads 110 with an electrical connector 112 comprising a simple pair of contacts.

In this embodiment, there is essentially a common transducer element serving the five reagent regions. To enable separate determinations to be made of different analytes, the light source comprises an array of five separate LED's 114 which are aligned respectively with the reagent regions and energised sequentially. If necessary, an appropriate mask can be introduced between the test element and the diode array so as to eliminate cross-talk.

It would be recognised that in this way, the common transducer represented by the pyroelectric film and its associated electrodes, is effectively multiplexed between the reagents responsive to the different analytes. The sequential illumination of different regions of the test element can of course be achieved in a variety of ways beyond the described diode array. One alternative, for example, would employ a single light source optically switched between five optical fibres each terminating adjacent the corresponding reagent.

Referring now to Figures 7a) and 7b), there is shown a modification in which the upper electrode is divided into distinct electrode regions such as 106¹, 106² and 106³ which underly the respective reagent regions 104 and are connected through individual leads 110 to the electrical connector 112. In this case the connector comprises six contacts connected respectively with the five upper electrode regions and the lower electrode layer 108. With this arrangement, a single diode 114 can be employed to illuminate all five reagent regions simultaneously. The sub-division of the upper electrode layer provides five effectively separate transducers each detecting heat generated on absorption within the corresponding reagent.

A still further alternative will be described with reference to Figures 8a) and 8b) which show a test strip 100 adapted for electrophoretic separation. The pyroelectric layer carries (as with the Figure 5 arrangement), a layer of electrophoresis separation gel 120 enabling the electrophoretic separation of bands such as that shown at 122. The underside of the pyroelectric layer 102 carries two interleaved electrode structures which are connected through leads 110 with an electrical connector 112 comprising a simple pair of contacts. As with the Figure 5 embodiment, alternating parallel electrode strips such as 124 and 126 are connected with opposite electrode structures. Means (not shown) are provided for generating the electrophesis electrical field.

To provide the necessary spatial resolution, a scanning light source is provided in the form of a light emitting diode 114 which is capable of movement along the length of the strip 100. The variation with time of the output signal from the effectively common transducer thus providing a measure of the optical density variation through the band structure.

It will be recognised that the scanning light source can be provided in a variety of other ways; one example employs a fixed laser diode producing a beam which is scanned across the band structure.

It should be recognised that the arrangements of Figures 6, 7 and 8 have been chosen as examples only. It would be possible, for example, to employ in the electrophoretic test element of Figure 8, the spatial diode array of Figure 6. In that case, however, a linear rather than an arial array would suffice. Also, it will be possible to use in the arrangements of Figure 6 and Figure 7 (and indeed in other forms of this invention) the interleaved electrode structure of Figure 8. The advantage of having electrodes on one side only of the pyroelectric film is - in electrophoresis - that an electrode adjacent the separation gel would tend to short circuit the applied separation electric field. There is, however, the more general advantage of having no electrode.on the upper surface of the pyroelectric film, this being of reducing the thermal conductivity which would otherwise tend to dissipate heat generated and reduce the spatial definition of the device.

In a more sophisticated arrangement, a spatial electrode array can be designed to permit a Fourier or Hadamard transformation to improve resolution.

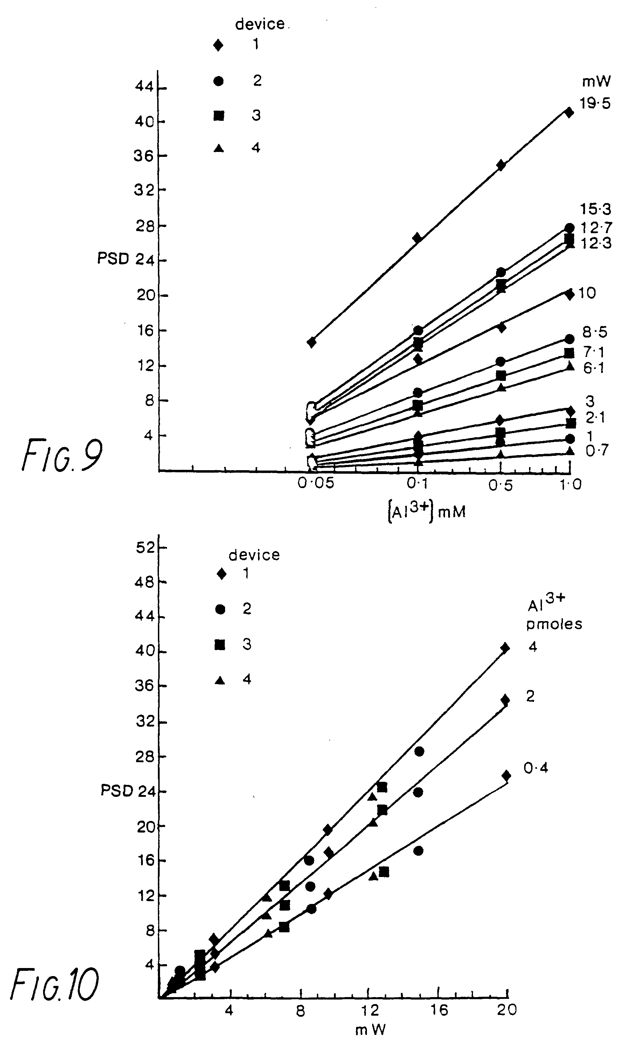

The method and apparatus according to this invention has been evaluated experimentally using various concentrations of aluminium ions with four separate devices at varying incident light power levels. There is shown in Figure 9 a plot of transducer output in millivolts against a millimolar concentration of aluminium ions. As shown, measurements were taken at various incident light power levels and with separate devices numbered 1 to 4. It will be seen that, for each device and incident light power level, there is a linear relationship between concentration and transducer output.

By calculation from the data of Figure 9, a measure can be obtained, of the quantity in moles of aluminium detected. Replotting of the calculated data in Figure 10 shows that for a particular concentration of aluminium ions and thus a particular absorption coefficient, there is a linear relationship between incident light power and measured transducer output.

Referring to Figure 11, there is illustrated schematically a transducer including a thermocouple. The transducer is in sheet form with an appropriate polymeric substrate 200. Parallel strips of platinum 202 and platinum/rhodium 204 are arranged in pairs with the strips of each pair lying in electrical contact along most of their length. Towards their right hand ends, the strips 202, 204 of each pair separate to form electrical contacts 206. External connections 208 and 210 are of platinum and platinum/rhodium respectively to avoid introducing further dissimilar metal junctions. At connection 208, a reference junction is formed with bridge piece 212 of platinum/rhodium. Connections are taken from bridge piece 212 and connection 210 to a voltmeter (not shown). It will be recognized that with the reference junction maintained essentially at constant temperature. Temperature variations at the junction between strips 202 and 204 are detectable as voltage changes. The remaining pairs of strips can either be connected in parallel within the transducer, as shown in Figure 11, or provided with individual external connections and reference junctions. The latter alternative will, as understood, provide spatial resolution of heat generation over the transducer surface.

The strips of platinum and platinum/rhodium may be deposited sufficiently thinly to transmit light.

The invention further envisages detection of energy absorption proximal the transducer surface by virtue of the mechanical energy arising on localised thermal expansion. A piezoelectric transducer may accordingly be employed to detect mechanical deformation. A thermocapacitive transducer may operate from the change in capacitance arising from mechanical deformation of a small plate capacitor. It should also be mentioned here that a thermocapacitive transducer can be utilised to sense a temperature dependent change in permittivity of a dielectric material. The mechanical energy may further be sensed through a magnetostrictive effect or through a optical-mechanical effect such as the production of free radicals on conversion of intense localised mechanical energy.

The electrical circuitry required to process the transducer output signal will of course depend upon the nature of the transducer. A form of phase sensitive detector locked to the modulation of the light or other radiation source will usually be preferred.

In particular forms of the method according to this invention, advantage can be taken of the electrode structure used for taking the output signal from the transducer means in order to apply voltage or current to the sample reagent. Thus, in one example, electrophoresis could be performed with an electric field applied through the same electrodes as used subsequently for generating the transducer output. The electrode means could also be used to electro-elute separated fractions off the electrophoresis gel and, with appropriate electrode patterns, could be used to electro-elute particular bands identified by photothermal detection within an automated instrumentation system.

Further examples of the use of electrode means in sample preparation, manipulation or processing steps include the application or detection of electrochemical potentials in spectroelectrochemical assays; releasing intracellular analytes by the application of high voltages to permeate cells; increasing the rate of interaction of macro-molecules using low amplitude alternating electrical signals and promoting aggregation of macro-molecules (for example antibody/antigen) using appropriate electrical fields.

In the case where the transducer element exhibits a piezoelectric effect, as for example does polyvinylidene fluoride, voltages can be applied to the electrode means to perform mechanical work on the sample. Thus, for example, the rate of reaction can in appropriate cases be increased by ultrasonic irradiation of the sample and reagent, sample or reagent particles can be manipulated in higher frequency acoustic fields to separate interference or to concentrate inter-acting particles, or to disrupt cells or other particles using cavitating fields and surface shear effects.

## Claims

1. Biochemical analytical apparatus utilising a colorimetric effect to provide an indication of one or more analytes in a sample, the apparatus comprising at least one body of reagent and a solid state transducer comprising a pyroelectric element and being substantially transparent to light at an irradiation frequency, the transducer element having electrode means and a surface, there being immobilised on said transducer surface said at least one body of reagent, said reagent undergoing a colorimetric change in the presence of the analyte, the transducer element being adapted to receive a body of sample at said surface, the volume of the reagent being small compared with the volume of the sample, and adapted to provide an output signal at said electrode means indicative of energy absorption proximal said surface; means for irradiating the sample through the transducer element with light at the irradiation frequency such that heat is generated by light absorption in an amount representative of said effect and processor means for receiving said transducer output signal and adapted to derive information therefrom regarding the analyte.

2. Apparatus according to Claim 1, wherein there is provided at said transducer surface a plurality of distinct bodies of reagent, at least some of said reagent bodies being responsive to different analytes in the sample.

3. Apparatus according to Claim 2, wherein there is provided at said transducer surface a known concentration of a substance to which one of said reagent bodies is responsive thereby to provide calibration information.

4. Apparatus according to Claim 2 or Claim 3, wherein said transducer element comprises a plurality of transducer element portions associated respectively with said reagent bodies.

5. Apparatus according to any one of Claims 2, 3 and 4, wherein said means for irradiating comprises means for irradiating said reagent bodies sequentially.

6. A method of biochemical analysis of a sample, using the biochemical analytical apparatus according to Claim 1, wherein the method comprises establishing a body of sample at said surface; irradiating the sample through the transducer element with light at the irradiation frequency such that heat is generated by light absorption in an amount representative of a colorimetric effect; and monitoring said transducer output signal to derive, through determination of heat generation at said surface, analyte information.

7. A method according to Claim 6, further comprising the step of providing at said transducer surface an electrophoretic or similar separation layer and, subsequent to the establishment of a body of sample at said surface, the step of effecting separation of species within the sample in the plane of the separation layer.

8. A method according to Claim 6 or Claim 7, wherein said monitoring step is adapted to provide spatial resolution of heat generation over said surface.

9. A method according to Claim 8, wherein said irradiating step comprises the sequential irradiation of different regions of said surface.

10. A method according to Claim 8, wherein said transducer means comprises a plurality of transducers having said transducer surface in common.

11. A method according to any one of Claims 6 to 10, comprising the further step, prior to or contemporaneously with said irradiating step, of applying an electric field to said sample.

12. A method according to any one of Claims 6 to 11, wherein said transducer surface is provided with a plurality of distinct bodies of reagent and wherein said transducer output signal is monitored through spatially resolved determination of heat generation at said surface.

13. A method according to Claim 12, wherein said irradiating step comprises the sequential irradiation of different regions of said surface.

14. A method according to Claim 12, wherein said transducer element comprises a plurality of discrete transducer element portions having said transducer surface in common.

15. Apparatus according to any one of Claims 1 to 5, comprising a plurality of interchangeable disposable test elements each comprising a transparent transducer sheet constituting said transducer element and electrical contact means formed on said sheet connecting with said electrode means there being immobilised on the transparent transducer sheet of each test element at least one body of reagent; a housing; electrical contact means for establishing electrical connection with said electrical contact means of the test element; light source means for illuminating said body of sample through the test element and processor means connected to said electrical contact means for receiving said transducer signal and adapted to provide therefrom analyte information regarding the sample.

16. Apparatus according to Claim 15, wherein there are provided a plurality of distinct reagent regions on each transducer sheet, the reagents being adapted to undergo a colorimetric or other optically detectable change indicative of respective analytes in the sample.

17. Apparatus according to Claim 15 or Claim 16, wherein there is provided at said transducer sheet an electrophoretic or similar separation layer, the test element further comprising electrode means for establishing an electric field within said layer.

## Patentansprüche

1. Biochemische Analysevorrichtung, die einen kolorimetrischen Effekt verwendet, um eine Anzeige von einem oder mehreren zu bestimmenden Stoffen (Analyt) in einer Probe bereitzustellen, wobei die Vorrichtung umfasst zumindest einen Reagenzkörper und einen Festkörper-Messwandler, der ein pyroelektrisches Element umfasst und für Licht bei einer Einstrahlungsfrequenz im Wesentlichen transparent ist, wobei das Messwandlerelement Elektrodenmittel und eine Oberfläche aufweist, wobei auf der Oberfläche des Messwandlers der zumindest eine Reagenzkörper festgelegt ist, wobei das Reagenz eine kolorimetrische Änderung in der Gegenwart des zu bestimmenden Stoffes durchmacht, wobei das Messwandlerelement ausgelegt ist, um einen Probenkörper auf der Oberfläche aufzunehmen, wobei das Volumen des Reagenz klein ist im Vergleich zu dem Volumen der Probe, und ausgelegt ist, um ein Ausgangssignal an den Elektrodenmitteln bereitzustellen, das indikativ für eine Energieabsorption nahe der Oberfläche ist; ein Mittel zum Bestrahlen bzw. Beleuchten der Probe durch das Messwandlerelement hindurch mit Licht bei der Einstrahlungsfrequenz, so dass durch Lichtabsorption Wärme in einem Ausmaß erzeugt wird, das repräsentativ für den Effekt ist, sowie Verarbeitungsmittel, um das Ausgangssignal des Messwandlers zu empfangen, und das ausgelegt ist, um daraus Information betreffend den zu bestimmenden Stoff abzuleiten.

2. Vorrichtung nach Anspruch 1, bei der auf der Oberfläche des Messwandlers eine Anzahl von verschiedenen Reagenzkörpern vorgesehen sind, wobei zumindest einige der Reagenzkörper auf verschiedene zu bestimmende Stoffe in der Probe ansprechen können.

3. Vorrichtung nach Anspruch 2, bei der auf der Oberfläche des Messwandlers eine bekannte Konzentration einer Substanz vorgesehen ist, auf die einer der Reagenzkörper ansprechen kann, um so eine Kalibrationsinformation bereitzustellen.

4. Vorrichtung nach Anspruch 2 oder Anspruch 3, bei der das Messwandlerelement einer Anzahl von Messwandlerelementabschnitten umfasst, die jeweils den Reagenzkörpern zugeordnet sind.

5. Vorrichtung nach einem der Ansprüche 2, 3 und 4, bei der das Mittel zum Bestrahlen ein Mittel zum sequenziellen Bestrahlen der Reagenzkörper umfasst.

6. Verfahren zur biochemischen Analyse einer Probe unter Verwendung der biochemischen Analysevorrichtung nach Anspruch 1, wobei das Verfahren die Schritte umfasst, dass ein Probenkörper auf der Oberfläche eingerichtet bzw. aufgebracht wird; dass die Probe durch das Messwandlerelement hindurch mit Licht bei der Einstrahlungsfrequenz bestrahlt wird, so dass durch Lichtabsorption Wärme in einem Ausmaß erzeugt wird, das repräsentativ für einen kolorimetrischen Effekt ist; und dass das Ausgangssignal des Messwandlers überwacht wird, um durch Bestimmung der Wärmeerzeugung auf bzw. nahe der Oberfläche Information betreffend den zu analysierenden Stoff (Analyt) abzuleiten.

7. Verfahren nach Anspruch 6, mit dem weiteren Schritt, dass auf der Oberfläche des Messwandlers eine elektrophoretische oder ähnliche Trennschicht vorgesehen wird, und nach dem Anbringen bzw. Aufbringen eines Körpers einer Probe auf der Oberfläche den Schritt, dass eine Trennung von Spezies innerhalb der Probe in der Ebene der Trennschicht bewirkt wird.

8. Verfahren nach Anspruch 6 oder Anspruch 7, bei dem der Überwachungsschritt ausgelegt ist, um für eine räumliche Auflösung der Wärmeerzeugung über die Oberfläche zu sorgen.

9. Verfahren nach Anspruch 8, bei dem der Bestrahlungsschritt die sequenzielle Bestrahlung von verschiedenen Bereichen der Oberfläche umfasst.

10. Verfahren nach Anspruch 8, bei dem das Messwandlermittel eine Anzahl von Messwandlern umfasst, die sich die Messwandleroberfläche teilen.

11. Verfahren nach einem der Ansprüche 6 bis 10, mit dem weiteren Schritt, dass vor oder gleichzeitig mit dem Bestrahlungsschritt ein elektrisches Feld an die Probe angelegt wird.

12. Verfahren nach einem der Ansprüche 6 bis 11, bei dem die Messwandleroberfläche mit einer Anzahl von verschiedenen Reagenzkörpern versehen wird und bei dem das Ausgangssignal des Messwandlers durch eine räumlich aufgelöste Bestimmung der Wärmeerzeugung auf bzw. nahe der Oberfläche überwacht wird.

13. Verfahren nach Anspruch 12, bei dem der Bestrahlungsschritt die sequenzielle Bestrahlung von verschiedenen Bereichen der Oberfläche umfasst.

14. Verfahren nach Anspruch 12, bei dem das Messwandlerelement eine Anzahl von diskreten Messwandlerelementabschnitten umfasst, die sich die Messwandleroberfläche teilen.

15. Vorrichtung nach einem der Ansprüche 1 bis 5, umfassend eine Anzahl von austauschbar angeordneten Testelementen, die jeweils eine transparente Messwandlerfolie bzw. -schicht, die das Messwandlerelement ausbildet, sowie elektrische Kontaktmittel umfassen, die auf der Folie bzw. Schicht ausgebildet sind und mit den Elektrodenmitteln verbinden, wobei auf der transparenten Messwandlerschicht von jedem Testelement zumindest ein Reagenzkörper festgelegt wird; ein Gehäuse; elektrische Kontaktmittel zum Bewirken einer elektrischen Verbindung mit den elektrischen Kontaktmitteln des Testelements; ein Lichtquellenmittel zum Beleuchten des Probenkörpers durch das Testelement hindurch sowie ein Verarbeitungsmittel, das mit den elektrischen Kontaktmitteln verbunden ist, um das Messwandlersignal zu empfangen, und das ausgelegt ist, um daraus eine Information über einen zu bestimmenden Stoff in Bezug auf die Probe bereitzustellen.

16. Vorrichtung nach Anspruch 15, bei der eine Anzahl von verschiedenen Reagenzabschnitten auf der Messwandlerfolie bzw. -schicht vorgesehen sind, wobei die Reagenzien ausgelegt sind, um eine kolorimetrische oder eine andere optisch detektierbare Änderung durchzumachen, die indikativ für jeweiligen zu bestimmenden Stoffe in der Probe ist.

17. Vorrichtung nach Anspruch 15 oder Anspruch 16, bei der auf der Messwandlerfolie bzw. -schicht eine elektrophoretische oder andere Trennschicht vorgesehen ist, wobei das Testelement außerdem Elektrodenmittel umfasst, um ein elektrisches Feld innerhalb der Schicht einzurichten.

## Revendications

1. Appareil d'analyse biochimique utilisant un effet colorimétrique pour fournir une indication d'un ou de plusieurs analytes dans un échantillon, l'appareil comprenant au moins un corps de réactif et un transducteur à l'état solide comprenant un élément pyroélectrique et étant sensiblement transparent à la lumière à une fréquence d'irradiation, l'élément de transducteur ayant des moyens d'électrode et une surface, sur ladite surface de transducteur étant immobilisé au moins un corps de réactif, ledit réactif subissant une modification colorimétrique en présence de l'analyte, l'élément de transducteur étant apte à recevoir un corps d'échantillon à ladite surface, le volume du réactif étant petit par rapport au volume de l'échantillon, et apte à fournir un signal de sortie audit moyen d'électrode indicateur de l'absorption d'énergie proximalement à ladite surface ; des moyens pour irradier l'échantillon à travers l'élément de transducteur avec la lumière à la fréquence d'irradiation telle que la chaleur est générée par absorption de lumière dans une quantité représentative dudit effet ; et des moyens de processeur pour recevoir ledit signal de sortie de transducteur et apte à dériver les informations à partir de celui-ci concernant l'analyte.

2. Appareil selon la revendication 1, dans lequel il est prévu à ladite surface de transducteur une pluralité de corps distincts de réactif, au moins certains desdits corps de réactif étant sensibles à différents analytes dans l'échantillon.

3. Appareil selon la revendication 2, dans lequel il est prévu à ladite surface de transducteur une concentration connue d'une substance à laquelle l'un desdits corps réactifs est sensible, fournissant ainsi des informations d'étalonnage.

4. Appareil selon la revendication 2 ou la revendication 3, dans lequel ledit élément transducteur comprend une pluralité de portions d'éléments de transducteur associées respectivement auxdits corps réactifs.

5. Appareil selon l'une quelconque des revendications 2, 3 et 4, dans lequel lesdits moyens pour irradier comprennent des moyens pour irradier lesdits corps réactifs séquentiellement.

6. Procédé d'analyse biochimique d'un échantillon, utilisant l'appareil d'analyse biochimique selon la revendication 1, dans lequel le procédé comprend la mise en place d'un corps d'échantillon à ladite surface ; l'irradiation de l'échantillon par le biais de l'élément transducteur avec la lumière à la fréquence d'irradiation de telle sorte que de la chaleur est générée par absorption de lumière dans une quantité représentative d'un effet colorimétrique ; et surveillance dudit signal de sortie de transducteur pour dériver, par détermination de la génération de chaleur à ladite surface, des informations sur l'analyte.

7. Procédé selon la revendication 6, comprenant de plus l'étape consistant à fournir à ladite surface de transducteur une couche électrophorétique ou de séparation similaire et, après mise en place d'un corps d'échantillon à ladite surface, l'étape de réalisation de la séparation d'espèces à l'intérieur de l'échantillon dans le plan de la couche de séparation.

8. Procédé selon la revendication 6 ou 7, dans lequel ladite étape de surveillance est apte à fournir la résolution spatiale de la génération de chaleur au-dessus de ladite surface.

9. Procédé selon la revendication 8, dans lequel ladite étape d'irradiation comprend l'irradiation séquentielle de différentes régions de ladite surface.

10. Procédé selon la revendication 8, dans lequel lesdits moyens de transducteur comprennent une pluralité de transducteurs ayant ladite surface de transducteur en commun.

11. Procédé selon l'une quelconque des revendications 6 ou 10, comprenant l'étape supplémentaire, avant ou simultanément avec ladite étape d'irradiation, d'application d'un champ électrique audit échantillon.

12. Procédé selon l'une quelconque des revendications 6 à 11, dans lequel ladite surface de transducteur est munie d'une pluralité de corps distincts de réactifs et dans lequel ledit signal de sortie de transducteur est contrôlé par détermination à résolution spatiale de la génération de chaleur à ladite surface.

13. Procédé selon la revendication 12, dans lequel ladite étape d'irradiation comprend l'irradiation séquentielle de différentes régions de ladite surface.

14. Procédé selon la revendication 12, dans lequel ledit élément de transducteur comprend une pluralité de portions d'éléments de transducteur discrètes ayant ladite surface de transducteur en commun.

15. Appareil selon l'une quelconque des revendications 1 à 5, comprenant une pluralité d'éléments de test jetables interchangeables, chacun comprenant une feuille de transducteur transparente constituant ledit élément de transducteur et les moyens de contact électrique formés sur ladite feuille en connexion avec lesdits moyens d'électrode, sur la feuille de transducteur transparente de chaque élément de test étant immobilisés au moins un corps de réactif ; un logement ; des moyens de contact électrique pour établir la connexion électrique avec lesdits moyens de contact électrique de l'élément de test ; des moyens de source de lumière pour éclairer ledit corps d'échantillon à travers l'élément de test ; et des moyens de processeur connectés auxdits moyens de contact électrique pour recevoir ledit signal de transducteur et aptes à fournir à partir de celui-ci des informations d'analyte concernant l'échantillon.

16. Appareil selon la revendication 15, dans lequel il est proposé une pluralité de régions de réactifs distinctes sur chaque feuille de transducteur, les réactifs étant aptes à subir une modification colorimétrique ou une autre modification détectable optiquement indicatrice des analytes respectifs dans l'échantillon.

17. Appareil selon la revendication 15 ou 16, dans lequel il est prévu au niveau de ladite feuille de transducteur une couche électrophorétique ou une couche de séparation similaire, l'élément de test comprenant de plus des moyens d'électrode pour établir un champ électrique à l'intérieur de ladite couche.
